# EUROPÄISCHE PATENTSCHRIFT

(11) **EP 2 576 327 B1**
(45) Veröffentlichungstag und Bekanntmachung des Hinweises auf die Patenterteilung: **29.03.2017**
(21) Anmeldenummer: 11725869.9
(22) Anmeldetag: 27.05.2011
(51) Int. Cl.: B62D 55/108, B60G 11/18, B60G 17/02, F16F 15/06, B60G 11/20, B60G 3/14

(54) **VORRICHTUNG ZUR DÄMPFUNG DER SCHWINGUNGEN BEI EINEM GLEIS- ODER KETTENFAHRZEUG**
DEVICE FOR DAMPING THE VIBRATIONS IN A CRAWLER OR TRACKED VEHICLE
DISPOSITIF POUR AMORTIR LES VIBRATIONS DANS UN VÉHICULE FERROVIAIRE OU CHENILLÉ

(30) Priorität: 31.05.2010 DE 102010022296
(43) Veröffentlichungstag der Anmeldung: 10.04.2013
(73) Patentinhaber: Rheinmetall Landsysteme GmbH, 29345 Unterlüß (DE)
(72) Erfinder: RIEDL, Jürgen, 86343 Königsbrunn (DE); MALL, Hans, 82256 Fürstenfeldbruck (DE)
(74) Vertreter: Dietrich, Barbara
(86) Internationale Anmeldenummer: PCT/EP2011/002630
(87) Internationale Veröffentlichungsnummer: WO 2011/151037

(56) Entgegenhaltungen:
- EP-A1- 0 937 634
- WO-A1-92/10375
- CH-A- 235 421
- DE-A1- 2 818 226
- FR-A- 1 349 711
- GB-A- 556 241
- JP-A- 5 155 225
- US-A- 2 463 040
- US-A- 2 705 635
- US-A- 4 043 417

## Beschreibung

Die Erfindung beschäftigt sich mit der Dämpfung einzelner Laufwerksrollen eines Gleis- oder Kettenfahrzeuges und schlägt vor, bisher verwendete lange Drehstabfedern in mehrere kleine Drehstabfedern aufzuteilen, um so Bauvolumen zu reduzieren sowie die Drehstabfedern des vorderen und hinteren Laufwerkrades nicht unterhalb der Wanne durchzuführen, sondern seitlich an der Wanne entlang zu legen.

Die Dämpfung der einzelnen Laufrollen wird nach dem Stand der Technik über je eine Drehstabfeder realisiert. Dabei ist diese über die gesamte Breite der Fahrzeugwanne auf der einen Seite verdrehfest mit dem Wannengehäuse und auf der anderen Seite mit dem drehbar gelagerten Tragarm der Laufrolle verbunden. Um einen Verdrehwinkel von ca. 100° erreichen zu können, beträgt die Länge der Drehstabfedern ca. 2- 2,5 m. Da die Drehstabfedern oberhalb des Wannenbodens gelagert und durch eine Abdeckung (Drehstabtunnel) geschützt werden, reduziert sich dadurch die nutzbare Höhe im Innenraum deutlich und führt dazu, dass das Betreten und der Aufenthalt einer Besatzung ab einer bestimmten Körperhöhe nur bedingt möglich ist.

Aus der DE 41 23 778 C2 sind Bemühungen bekannt, ganze Laufwerkskomponenten auf einem Laufwerksträger in Form von Modulen anzuordnen, die über Zug- und / oder Druckstreben miteinander verbunden sind, die ihrerseits unter oder über der Bodenplatte der Fahrzeugwanne quer zur Fahrzeuglängsachse angeordnet sind.

in Weiterführung derartiger Ansätze wird mit der EP 1 117 555 B2 vorgeschlagen, dass die gesamte Antriebseinheit in einer zugeordneten Seitenwandung der Fahrzeugwanne direkt oder über Abstandsringe gelagert ist, sodass für die bisherigen Streben kein Bauraum mehr unterhalb oder oberhalb der Bodenplatte benötigt wird. Die statischen Einheiten der Antriebseinheit sind ihrerseits durch Schwingungsdämpfungsmittel von der Fahrzeugwanne schwingungsmäßig entkoppelt. In der Praxis hat sich diese Lösung nicht groß durchsetzten können.

Die CH 235 421 A betrifft eine Abfederungseinrichtung für Kraftfahrzeuge wie Gleiskettenfahrzeuge. Dabei sind die Tragrohre mit den Drehstabfedern je zweier aufeinanderfolgenden Laufrollen im Winkel zueinander liegend an einem Lager am Fahrzeug so abgestützt, dass sich ihre Aschen in einem Punkt der Lagerachse schneiden und die beiden Laufrollen mit den Tragrohren um die Lagerachse schwingbar sind. Die US 24 63 040 A1 offenbart eine weitere relevante Abfederungseinrichtung für Gleiskettenfahrzeuge.

Die GB 556,241 A offenbart ein Federsystem für Fahrzeuge des Endlos- oder Raupentyps. Dabei sind die Rollen bzw. deren Welle in einem Lagergehäuse eingebunden. Jedes Lagergehäuse ist durch ein paar parallele Verbindungen mit dem Fahrzeugkörper lagebeweglich verbunden. Das Gehäuse ist über eine Schnittstelle mit zwei ebenfalls am Fahrzeugkörper befestigten Torsionsstäben verbunden. Wenn das Lagergehäuse sich nach oben bewegt aufgrund des Auftreffens auf ein Hindernis, wird die Aufwärtsbewegung durch die Torsionsfederstäbe gedämpft.

Aus der DE 28 18 226 A1 ist eine redarungsvorrichtung für Gleiskettenfahrzeuge bekannt, die, um von langen Drehstäben wegzukommen, für jade Tragrolle bzw. Zwillingstragrolle eine Federung vorsieht, die weniger Platz beansprucht und keinen Verlust im / an Innenraum verursacht. Dazu sind mehrere Torsionsdrahetäbe um eine zentrale Torsionsachse eingebunden, die über ihre gezahnten Enden miteinander verbunden sind. Diese Vorrichtung ist oberhalb der Laufräder eingebunden. Durch die drei in Reihe geschalteten Torslonselemente wird ein relativ langer Federweg erreicht. Nachteilig bei dieser Lösung ist, dass die maximale Länge der Torsionsdrehstäbe durch die Breite der beiden Laufräder begrenzt ist.

Die EP 0 937 634 A1 betrifft ein Kettenfahrzeug mit Kettenrädem, die rechts und links am Fahrzeug angebracht sind und mittels Torsionsstäbe miteinander verbunden sind.

Entsprechend sind parallele Wege aus dem Stand der Technik bekannt, die Hydraulikzylinder zu verwenden, um so die Dämpfung ebenfalls nach außen zu verlegen. So wird in der DE 29 47 974 A1 eine Stabilisierungsanordnung für einen von einem Kettenlaufwerk getragenen Wannenaufbau eines Kettenfahrzeuges offenbart, deren hydraulisch stoßdämpfenden Mittel die Laufwerksrollen des Kettenlaufwerks abstützen.

Ein Hydrop-Element und die Verwendung in einem Fahrzeug mit Laufwerk und Laufwerksrollen ist auch der DE 103 28 541 A1 entnehmbar.

Auch wenn Wege vorgeschlagen werden, wie der Temperaturentwicklung in einem solchen Zylinder entgegengewirkt werden kann, z. B. DE 10 2008 026 680 A1 oder die bewegungsabhängige Dämpfung vorgesehen wird, bleibt das Temperäturproblem ein Funktionsproblem.

Die Erfindung stellt sich daher die Aufgabe, eine bauraumsparende Vorrichtung für eine Dämpfung der Schwingungen aufzuzeigen.

Gelöst wird die Aufgabe durch die Merkmale des Patentanspruchs 1. Vorteilhafte Ausführungen zeigen die Unteransprüche auf.

Der Erfindung liegt die Idee Zugrunde, die Drehstabfedern nicht unterhalb der Wanne quer zur Fahrtrichtung einzubinden, sondern entlang der Fahrzeugwanne, also annähernd parallel dazu. In Weiterführung der Erfindung werden die langen, die Torsion aufnehmenden Drehstabfedern der Zwischenlaufwerksrollen in mehrere kleinere Drehstabfedern aufgeteilt und in Fahrtrichtung zur Fahrzeugwanne ausgerichtet bzw. angebracht. Diese werden über bekannte Antriebs- bzw. Übertragungselemente miteinander funktional verbunden und außerhalb des Innenraumes untergebracht. Dadurch wird für die Dämpfungseinrichtung kein Bauraum mehr quer und unterhalb der Fahrzeugwanne benötigt, maximal im Seitenbereich oder innerhalb einer geringfügigen Ausnehmung in der Wanne, einer sogenannten Wannennische. Eine weitere Alternative ist die Aufteilung der Drehstäbe und deren bevorzugt parallele Aufsrichtung zueinander zur Schaffung einer Dämpfungsvorrichtung zumindest für die mittleren Laufräder.

Soll eine Torsion (Drehbewegung) von 40° aufgenommen werden, wird diese auf die einzelnen Drehstäbe derart verteilt, dass beispielsweise bei vier identischen Drehstäben jeder 10° und bei beispielsweise fünf Drehstäben jeder Drehstab bzw. jedes Drehstabfederrohr dann 8° der Drehbewegung aufnimmt. Unterschiedliche Drehstäbe sind aber auch möglich. Jedoch liegt der Vorteil von identischen, also gleichen Drehstäben darin, dass sie die Drehbewegung in gleichem Maße aufnehmen und diese dadurch gleichmäßig verteilt wird.

Die Aufteilung der Drehstabfedern der Zwischenlaufwerksrollen als auch der vorderen und hinteren kann in Form einer Reihenschaltung, in Form einer Parallelschaltung sowie in Kombinationen beider Formen erfolgen.

Anhand eines Ausführungsbeispiels mit Zeichnung soll die Erfindung näher erläutert werden. Es zeigt:
- Fig. 1: eine Darstellung der Drehstablängsanordnung entlang einer Fahrzeugwanne,
- Fig. 2: eine Darstellüng einer Drehstablängsanordnung aus Fig. 1 in Form einer Reihenschaltung mehrerer Drehstäbe.
- Fig. 3: eine Darstellung der Kombination der Drehstablängsanordnung mit einer weiteren Dämpfungsvorrichtung,
- Fig. 4: eine Drehstabkonstruktion mit mehreren, parallel angeordneter Drehstäben aus Fig. 3 - belastet,
- Fig. 5: die Drehstabkonstruktion aus Fig. 4 - entlastet,
- Fig. 6: eine Draufsichtdarstellung der geteilten Drehstäbe aus Fig. 3,
- Fig. 7: eine Draufsichtdarstellung der Variante der längs eingebundenen ganzen bzw. geteilten Drehstäbe,
- Fig. 8: eine Draufsichtdarstellung der Kombination der Einbindungen der Drehstäbe.

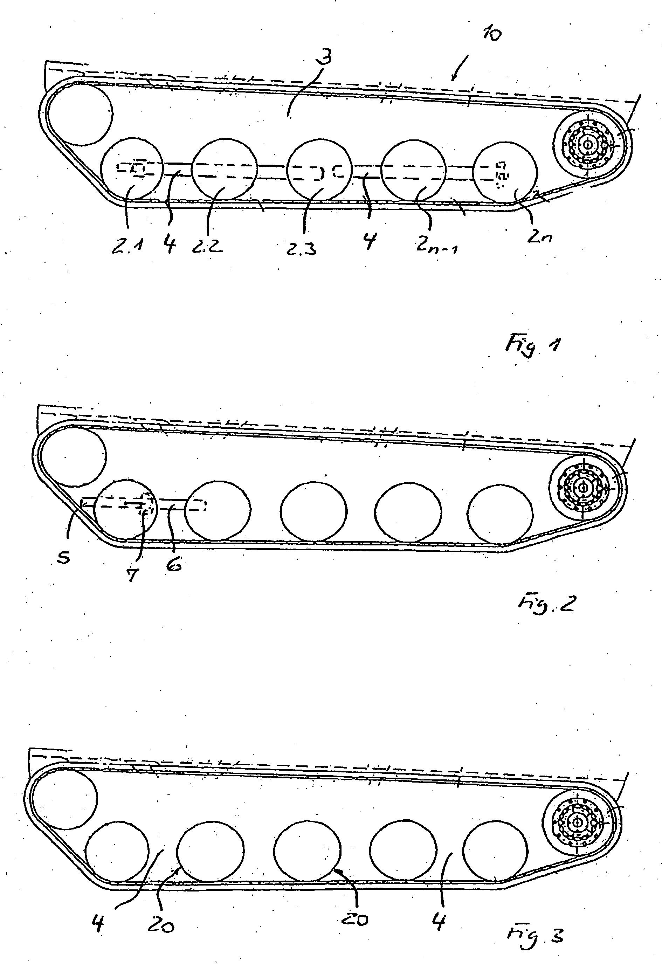

In Fig. 1 ist mit 1 eine Vorrichtung zur Dämpfung von Schwingungen eines Kettenlaufwerks mit mehreren Laufwerksrädern bzw. -rollen 2ₙ eines Ketten- bzw. Gleiskettenfahrzeuges 10, schematisch dargestellt, gekennzeichnet, die entlang einer Fahrzeugwanne 3 angebracht und einerseits mit dem ersten bzw. letzten Laufwerksrad 2₁, 2ₙ und andererseits mit der Fahrzeugwanne 3 verbunden ist. Es wird hierbei ein längs eingebundener Drehstab (Drehstabfeder) 4 verwendet werden, der längs in Fahrzeugrichtung an der Fahrzeugwanne 3 angebracht ist.

Neben der Dämpfung des ersten und des letzen Laufrades 2₁, 2ₙ kann je nach Länge der Wanne 3 auch das zweite oder vorletzte Laufrad über je einen Drehstab 4, dessen Torsionsbewegung über die bereits erwähnte Übertragungsmittel eingeleitet wird, übernommen werden.

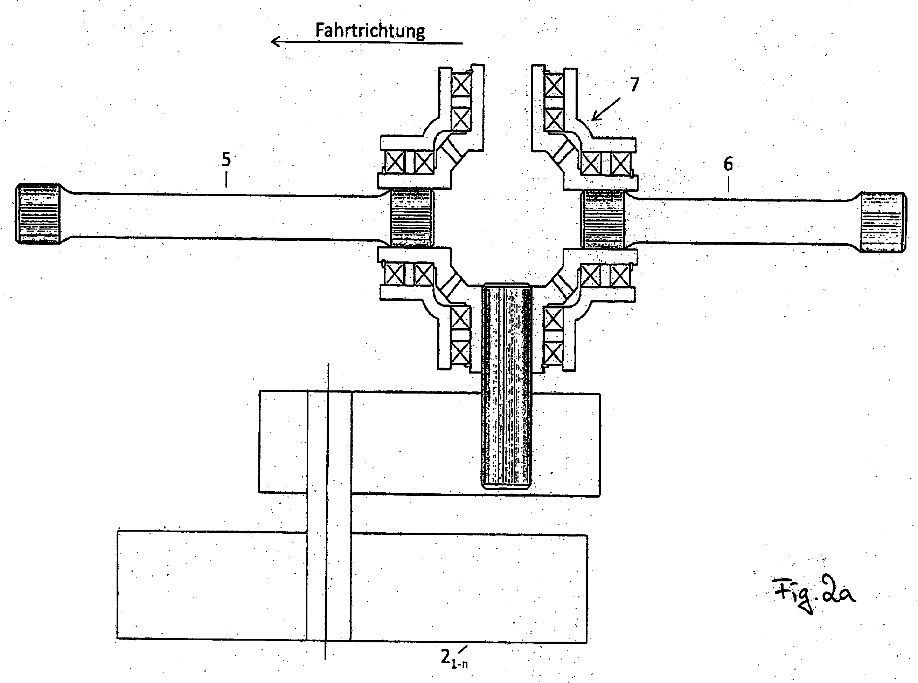

Reicht die Länge hingegen nicht, werden die Drehstäbe der restlichen Laufräder 2₁ bis 2ₙ₋₁ vorzugsweise geteilt (Fig. 2). Die Vorrichtung 1' besteht in dieser Variante aus einer Reihenschaltung von wenigsten zwei, vorzugsweise mehreren Drehfederstäben 5, 6. Dabei sind die beiden Drehfederstäbe 5,6 über Antriebs- bzw. Übertragungsmittel 7 miteinander funktional verbindbar sind. Diese Übertragungs- oder Verbindungsmittel 7 sind frei wählbar und können beispielsweise Zahnriemen, Zahnräder, Hebelmechanismen, Ketten oder dergleichen sein (Fig. 2a).

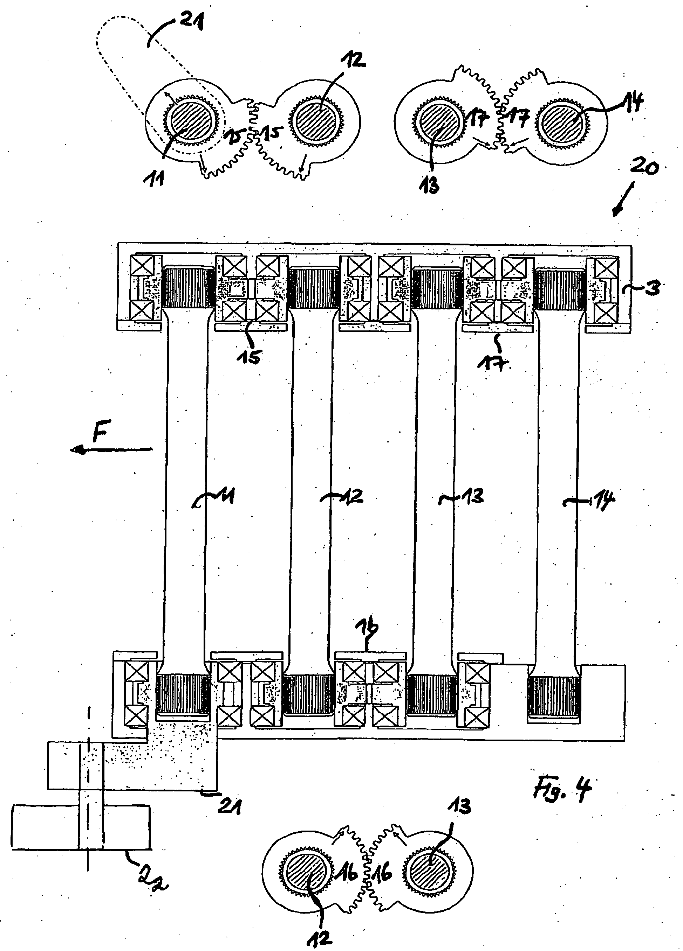

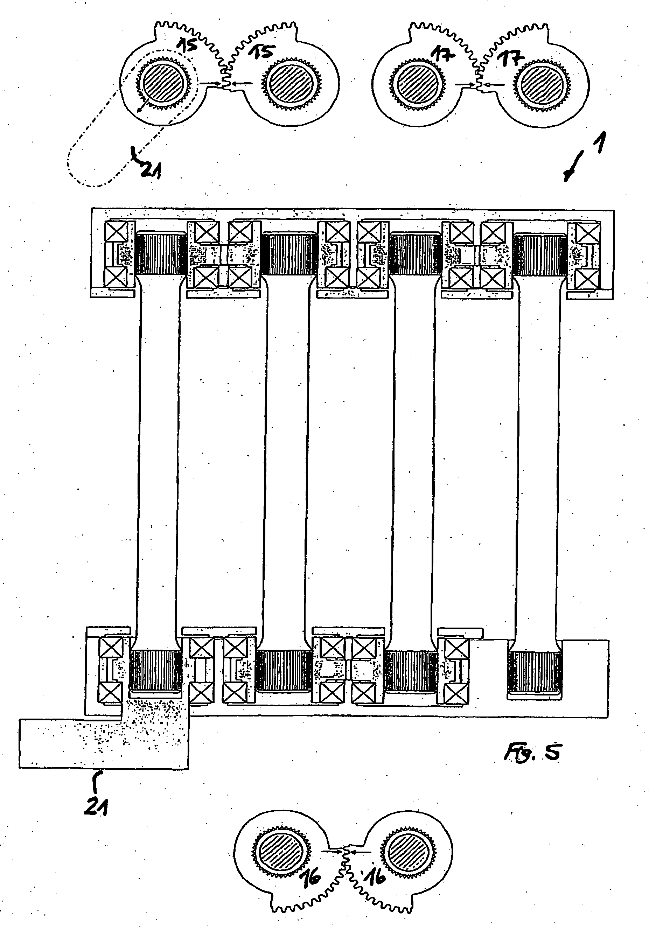

In Weiterführung kann vorgesehen werden, dass eine Vorrichtung 20 insbesondere für die Zwischenlaufwerksräder 2₂ bis 2_{n-,} eingebunden wird (Fig. 3), wobei hier mehrere Drehstäbe 11-14, wenigstens zwei, über Mittel 15 -17, beispielsweise Zahnradpaare, miteinander funktional verbunden werden. Der Drehstab 11 steht dabei über das Zahnradpaar 15 mit dem Drehstab 12 in Wirkverbindung, der über das Zahnradpaar 16 wiederum mit dem Drehstab 13 in Wirkverbindung steht. Das Zahnradpaar 17 verbindet dann den Drehstab 14 mit dem Drehstab 13. Durch diese Anordnung verdreht sich jeder dieser Drehstäbe 11-14 (Fig. 4 und Fig. 5).

Die Drehstabfedern 11-14 sind bevorzugt identisch, auch in ihren Längen. Wurde ein Laufwerksträger bzw. eine Laufwerksrolle 2₂ bis 2ₙ₋₁ bisher über eine 2.000 mm lange Drehstabfeder gedämpft, die einen Verdrehwinkel von 100° zuließ, werden nunmehr in der neuen Vorrichtung 1 beispielsweise vier identischen Drehstäbe. 11-14 mit einer Länge von beispielsweise 550 mm eingebunden. Der erste Drehstab 11 ist mit einem Tragarm 21 der Laüfwerksrolle - hier 2₂ - verbunden und der letzte Drehstab 14 im Wännengehäuse 3 gelagert. Jede Drehstabfeder 11-14 nimmt dann ihrerseits eine Verdrehung um 25° auf. (Variable und damit unterschiedliche Längen der Drehstäbe sind ebenfalls möglich, erhöhen aufgrund der Verbindungsmittel der Drehstäbe untereinander jedoch dann den konstruktiven Aufbau, wenn diese Drehstäbe ausschließlich parallel zueinander ausgerichtet sind.)

Die Drehstäbe 11-14 in Fig. 4 sind belastet, die in Fig. 5 entlastet dargestellt.

Je nach Platzbedarf können die Drehstäbe auch in dieser Vorrichtung 20 in Reihenschaltung, Parallelschaltung als auch kombiniert in Parallel- und Reihenschaltung angeordnet werden.

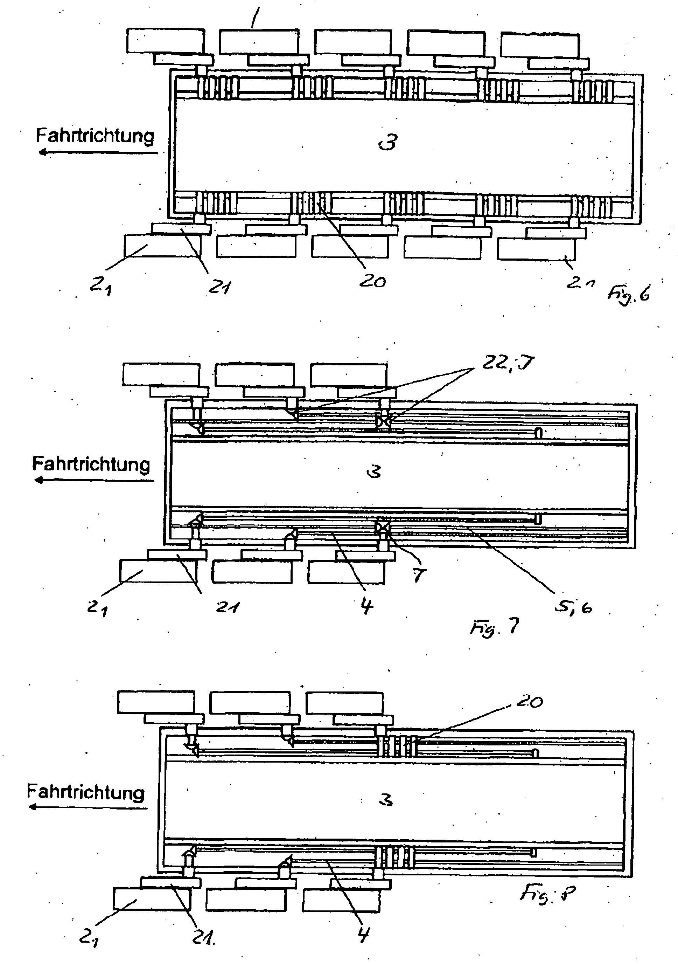

Die Fig. 6 bis 8 zeigen in einer Draufsicht die verschiedenen Varianten und Möglichkeiten der Einbindung der Dämpfungsstäbe 4, 5, 6 sowie der aus mehreren Stäben11 - 14 bestehenden Vorrichtung 20 zwischen dem jeweiligen Tragarm 21 und der Fahrzeugwanne 3 (skizzenhaft). Ebenfalls erkennbar, befindet sich zwischen den landen seitlichen Drehstäben 4 und den geteilten seitlichen Drehstäben 5 und 6 und den Tragarmen 21 jeweils ein Übertragungs- oder Umlenkgetriebe 7 bzw. 22.

## Patentansprüche

1. Ketten- oder Gleiskettenfahrzeug (10) mit einer Fahrzeugwanne (3) und mehreren Laufwerksrollen (2ₙ) sowie einer Vorrichtung (1, 1`) zur Dämpfung von Schwingungen eines Kettenlaufwerks mittels Torsions- oder Drehfederstäben, **dadurch gekennzeichnet, dass** zumindest die vordere Laufwerksrolle (2₁), aber auch die hintere Laufwerksrolle (2ₙ), durch je einen an einem Seitenbereich der Fahrzeugwanne (3) des Kettenfahrzeugs außerhalb des Innenraumes der Fahrzeugwanne und längs in Fahrzeugrichtung an der Fahrzeugwanne (3) angebrachten Drehfederstab (4) an diesem gelagert ist, wobei jede Laufwerkrolle (2₁, 2ₙ) mit einem drehbar gelagerten Tragarm (21) verbunden ist und der Drehfederstab (4) zwischen dem jeweiligen Tragarm (21) und dem Seitenbereich der Fahrzeugwanne angeordnet ist.

2. Ketten- oder Glsiskettenfahrzeug (10) nach Anspruch 1, **dadurch gekennzeichnet, dass** die Vorrichtung (1, 1') einerseits mit der ersten (2₁) bzw. letzten Laufwerksrolle (2ₙ) und andererseits mit der Fahrzeugwanne (3) verbunden ist.

3. Ketten- oder Gleiskettenfahrzeug (10) nach Anspruch 1 oder 2, dadurch gekennzeich. net, dass eine zweite und / oder vorletzte Laufwerksrolle (2₂, 2ₙ₋₁) durch einen entlang der Fahrzeugwanne (3) angeordneten Drehfederstab (4) gelagert werden kann.

4. Ketten- oder Gleiskettenfahrzeug (10) nach einem der Ansprüche 1 bis 3, **dadurch gekennzeichnet, dass** der Drehfederstab (4) aus einer Reihenschaltung von wenigstens zwei, vorzugsweise mehreren Drehfederstäben (5, 6) gebildet wird, die über ein Übertragungselement (7) funktional miteinander verbunden sind.

5. Ketten- oder Gleiskettenfahrzeug (10) nach einem der Ansprüche 1 bis 4, dadurch gekennzeichnen, das zumindest für die Lagerung der Zwischentaufwerksrollen (2₂ bis 2ₙ₋₁) weitere Dämpfungsvorrichtungen (20) vorgesehen sind.

6. Ketten- oder Gleiskettenfahrzeug (10) nach Anspruch 5, **dadurch gekennzeichnet, dass** die Vorrichtung (20) mehrere kleiner oder kürzere Drehfederstäbe (11-14), wenigstens jedoch zwei, umfasst, welche, in Fahrtrichtung gesehen an der Fahrzeugwanne (3) ausgerichtet und über bekannte Antriebs- und/ oder Übertragungselemente(15-17) miteinan- der funktional verbunden sind.

7. Ketten- oder Gleiskettenfahrzeug (10) nach Anspruch 6, **dadurch gekennzeichnet, dass** die Drehfederstäbe (11-14) der weiteren Vorrichtung (20) in Reihe und / oder parallel zueinander angeordnet sind.

8. Ketten- oder Gleiskettenfahrzeug (10) nach einem der Ansprüche 4 bis 7, **dadurch gekennzeichnet, dass** der erste Drehfederstab (11, 5) am Tragarm (21) der Laufwerksrolle (2) angebunden und der letzte Drehfederstab (14, 6) in der Fahrzeugwanne (3) gelagert ist.

9. Ketten- oder Gleiskettenfahrzeug (10) nach einem der Ansprüche 4 bis 8, **dadurch gekennzeichnet, dass** die Antriebs- und / oder Übertragungselemente (7, 15-17) frei wahlbar sind und beispielsweise Zahnriemen, Zahnräder, Hebelmechanismen, Ketten oder dergleichen sein können.

10. Ketten- oder Gleiskettenfahrzeug (10) nach einem der Ansprüche 4 oder 6 bis 9, **dadurch gekennzeichnet, dass** die Drehfederstäbe (5, 6, 11-14) identisch und / oder verschieden sind, auch in ihrer Länge.

## Claims

1. Crawler or tracked vehicle (10) having a vehicle hull (3) and a plurality of running gear rollers (2ₙ) and an apparatus (1, 1') for damping vibrations of a tracked chassis by means of torsion bars or torsion spring bars, **characterized in that** at least the front running gear roller (2₁), but also the rear running gear roller (2ₙ), is mounted on a side region by way of in each case one torsion spring bar (4) which is attached on the said side region of the vehicle hull (3) of the crawler vehicle outside the interior space of the vehicle hull and on the vehicle hull (3) longitudinally in the vehicle direction, each running gear roller (2₁, 2ₙ) being connected to a rotatably mounted carrying arm (21), and the torsion spring bar (4) being arranged between the respective carrying arm (21) and the side region of the vehicle hull.

2. Crawler or tracked vehicle (10) according to Claim 1, **characterized in that** the apparatus (1, 1') is connected on one side to the first (2₁) and last running gear roller (2ₙ) and on the other side to the vehicle hull (3).

3. Crawler or tracked vehicle (10) according to Claim 1 or 2, **characterized in that** a second and/or penultimate running gear roller (2₂, 2ₙ₋₁) can be mounted by way of a torsion spring bar (4) which is arranged along the vehicle hull (3).

4. Crawler or tracked vehicle (10) according to one of Claims 1 to 3, **characterized in that** the torsion spring bar (4) is formed from a series connection of at least two, preferably a plurality of torsion spring bars (5, 6) which are connected functionally to one another via a transmission element (7).

5. Crawler or tracked vehicle (10) according to one of Claims 1 to 4, **characterized in that** further damping apparatuses (20) are provided at least for mounting the intermediate running gear rollers (2₂ to 2ₙ₋₁).

6. Crawler or tracked vehicle (10) according to Claim 5, **characterized in that** the apparatus (20) comprises a plurality of, but at least two, smaller or shorter torsion spring bars (11-14) which are oriented on the vehicle hull (3) as viewed in the driving direction and are connected functionally to one another via known drive and/or transmission elements (15-17).

7. Crawler or tracked vehicle (10) according to Claim 6, **characterized in that** the torsion spring bars (11-14) of the further apparatus (20) are arranged in series and/or in parallel with respect to one another.

8. Crawler or tracked vehicle (10) according to one of Claims 4 to 7, **characterized in that** the first torsion spring bar (11, 5) is attached on the carrying arm (21) of the running gear roller (2), and the last torsion spring bar (14, 6) is mounted in the vehicle hull (3).

9. Crawler or tracked vehicle (10) according to one of Claims 4 to 8, **characterized in that** the drive and/or transmission elements (7, 15-17) are freely selectable and can be, for example, toothed belts, gearwheels, lever mechanisms, chains or the like.

10. Crawler or tracked vehicle (10) according to one of Claims 4 or 6 to 9, **characterized in that** the torsion spring bars (5, 6, 11-14) are identical and/or different, even in terms of their length.

## Revendications

1. Véhicule à chenilles (10) comprenant un châssis-baquet (3) et plusieurs rouleaux de mécanisme roulant (2ₙ) ainsi qu'un dispositif (1, 1') destiné à amortir les vibrations d'un mécanisme roulant à chenilles au moyen de barres de torsion ou à ressort de torsion, **caractérisé en ce qu'**au moins le rouleau de mécanisme roulant à l'avant (2₁), mais également le rouleau de mécanisme roulant à l'arrière (2ₙ), sont supportés respectivement sur une barre à ressort de torsion (4) montée sur une zone latérale du châssis-baquet (3) du véhicule à chenilles en-dehors de l'espace intérieur du châssis-baquet et sur le châssis-baquet (3) longitudinalement dans le sens de déplacement, chaque mécanisme roulant (2₁, 2ₙ) étant relié à un bras porteur (21) monté rotatif et la barre à ressort de torsion (4) étant disposée entre le bras porteur (21) respectif et la zone latérale du châssis-baquet.

2. Véhicule à chenilles (10) selon la revendication 1, **caractérisé en ce que** le dispositif (1, 1') est relié d'un côté avec le premier (2₁) ou le dernier rouleau de mécanisme roulant (2ₙ), et de l'autre côté avec le châssis-baquet (3).

3. Véhicule à chenilles (10) selon la revendication 1 ou 2, **caractérisé en ce qu'**un deuxième et/ou un avant-dernier rouleau de mécanisme roulant (2₂, 2ₙ₋₁) peuvent être supportés par une barre à ressort de torsion (4) disposée le long du châssis-baquet (3).

4. Véhicule à chenilles (10) selon l'une des revendications 1 à 3, **caractérisé en ce que** la barre à ressort de torsion (4) est constituée d'un montage en série d'au moins deux barres à ressort de torsion (5, 6), de préférence plus, qui sont reliées fonctionnellement entre elles par le biais d'un élément de transmission (7).

5. Véhicule à chenilles (10) selon l'une des revendications 1 à 4, **caractérisé en ce que** des dispositifs d'amortissement (20) supplémentaires sont prévus au moins pour supporter les rouleaux de mécanisme roulant intermédiaires (2₂ à 2ₙ₋₁).

6. Véhicule à chenilles (10) selon la revendication 5, **caractérisé en ce que** le dispositif (20) comprend plusieurs barres à ressort de torsion (11 à 14) plus petites ou plus courtes, toutefois au minimum deux, qui, vues dans le sens du déplacement, sont alignées sur le châssis-baquet (3) et reliées fonctionnellement entre elles par le biais d'éléments d'entraînement et/ou de transmission (15 à 17) connus.

7. Véhicule à chenilles (10) selon la revendication 6, **caractérisé en ce que** les barres à ressort de torsion (11 à 14) du dispositif (20) supplémentaire sont disposées en série et/ou en parallèle les unes avec les autres.

8. Véhicule à chenilles (10) selon l'une des revendications 4 à 7, **caractérisé en ce que** la première barre à ressort de torsion (11, 5) est rattachée au bras porteur (21) du rouleau de mécanisme roulant (2) et la dernière barre à ressort de torsion (14, 6) est supportée dans le châssis-baquet (3).

9. Véhicule à chenilles (10) selon l'une des revendications 4 à 8, **caractérisé en ce que** les éléments d'entraînement et/ou de transmission (7, 15 à 17) peuvent être choisis librement et peuvent être, par exemple, des courroies crantées, des roues dentées, des mécanismes à levier, des chaînes ou équivalents.

10. Véhicule à chenilles (10) selon l'une des revendications 4 ou 6 à 9, **caractérisé en ce que** les barres à ressort de torsion (5, 6, 11 à 14) sont identiques et/ou différentes, également au niveau de leur longueur.
